# EUROPEAN PATENT APPLICATION

(11) **EP 2 629 223 A1**
(43) Date of publication of application: **21.08.2013**
(21) Application number: 12305163.3
(22) Date of filing: 14.02.2012
(51) Int. Cl.: G06F 21/10

(54) **System, devices and methods for collaborative execution of a software application comprising at least one encrypted instruction**

(71) Applicant: Thomson Licensing, 92130 Issy-les-Moulineaux (FR)
(72) Inventor: Karroumi, Mohamed, 92443 Issy-les-Moulineaux (FR); Durand, Alain, 92443 Issy-les-Moulineaux (FR); Alessio, Davide, 92443 Issy-les-Moulineaux (FR); Joye, Marc, 92443 Issy-les-Moulineaux (FR)
(74) Representative: Ståhl, Björn Niclas

(57) **Abstract**

Collaborative execution by a first device (110) and a second device (120) of a software application comprising at least one encrypted instruction (*J*). The first device (110) obtains (S10) a first encrypted instruction (*J*); generates (S11; S20) a session key *k*₂; encrypts (S11; S21) the first encrypted instruction (*J*); encrypts (S11; S22) the session key *k*₂ using a first encryption algorithm and a first key *k*₁; and transfers (S12; S23) the encrypted first encrypted instruction and the encrypted session key *k*₂ to the second device (220). The second device (220) decrypts (S13; S24) the encrypted session key k₂ using the first key *k*₁; decrypts (S13; S25) the encrypted first encrypted instruction to obtain the first encrypted instruction (*J*); decrypts (S14; S26) the first encrypted instruction using a third key *k*ₚᵣₑ to obtain an instruction (*I*); encrypts (S15; S27) the instruction (*I*) using a second encryption algorithm and the session key *k*₂ to obtain a second encrypted instruction (*M*); and transfers (S15; S28) the second encrypted instruction (*M*) to the first device (210). The first device (210) decrypts (S17; S29) the second encrypted instruction (*M*) using the session key *k*₂ to obtain the instruction (*I*); and executes (S18; S30) the instruction *(I).*

## Description

### TECHNICAL FIELD

The present invention relates generally to encryption, and in particular to a secure protocol for collaborative processing.

### BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

A known security problem is how to ensure that a software application cannot be properly executed without possession of the original support storing the software application.

A typical prior art protection consists in binding the software application to the support used for its distribution. The binding mechanism is generally based on some information specific to the support (support ID, support key, etc). This is however not sufficient, in particular when the application is intended to be run on a non-trusted platform.

It will thus be appreciated that there is a need for a protocol that enables a first device to check the presence of a second device during collaborative processing of some shared data, i.e. a protocol that ensures that for example a computer running an application is in the presence of a kind of dongle needed for proper execution of the application.

WO 2009/095493 describes the following protocol for checking the presence of a small device:
1- A software manufacturer pre-encrypts at least some instructions of a software application using an algorithm and a key that is known only to the software manufacturer, i.e. *J* = *Eₚᵣₑ{ kₚᵣₑ* }(*I*). Then the encrypted software application is copied onto its distribution support.
2- The corresponding decryption module *Eₚᵣₑ⁻¹* and key *kₚᵣₑ* are known to a circuit soldered on the distribution support, but not to the software application. Thus, the instruction *J= Eₚᵣₑ{ kₚᵣₑ }(I)* cannot be decrypted by the application running on a host, which leads to an incorrect wrong operation if executed as is. This will for example be the case for a copy.
3- The application sends data to the support and uses the circuit each time it needs to execute protected instruction *J*.

This protocol is interesting but remains vulnerable to dictionary attacks. This is especially true if an attacker is able to spy on the communication bus between the host and the distribution support.

A possible alternative is the use of standard public key cryptography mechanisms. For instance, a secure authenticated channel could be set up between the game console and the circuit, what would prevent any communication spying. However, this would dramatically increase the cost of the circuit, as it would need to implement securely and efficiently public key cryptography algorithms.

It will thus be appreciated that there may be a need for a solution that can overcome drawbacks of the prior art. The present invention provides such a solution.

### SUMMARY OF INVENTION

In a first aspect, the invention is directed to a first method of participating in collaborative execution of a software application comprising at least one encrypted instruction being the encryption of an unencrypted instruction. A first device obtains a first encrypted instruction; generates a session key; encrypts at least the session key using a first encryption algorithm and a first key; and transfers the first encrypted instruction and the encrypted session key to a second device; receives from the second device a second encrypted instruction, the second encrypted instruction being an encryption using the session key of the unencrypted instruction; decrypts the second encrypted instruction using the session key to obtain the instruction; and executes the instruction.

In a first preferred embodiment, the first device super-encrypts the first encrypted instruction before transfer to the second device.

In a second aspect, the invention is directed to a second method of participating in collaborative execution of a software application comprising at least one encrypted instruction. A second device receives a first encrypted instruction and an encrypted session key from a first device, the session key being encrypted using a first encryption algorithm and a first key; decrypts at least the encrypted session key using the first key; decrypts the first encrypted instruction using a third key to obtain an instruction; encrypts the instruction using a second encryption algorithm and the session key to obtain a second encrypted instruction; and transfers the second encrypted instruction to the first device.

In a first preferred embodiment, the first encrypted instruction is received super-encrypted and the second device decrypts the super-encryption of the encrypted first encrypted instruction.

In a third aspect, the invention is directed to a first device for participating in collaborative execution of a software application that comprises at least one encrypted instruction being the encryption of an unencrypted instruction. The first device comprises a processor configured to obtain a first encrypted instruction; generate a session key; encrypt at least the session key using a first encryption algorithm and a first key; transfer the first encrypted instruction and the encrypted session key to a second device; receive from the second device a second encrypted instruction, the second encrypted instruction being an encryption using the session key of the unencrypted instruction; decrypt the second encrypted instruction using the session key to obtain the instruction; and execute the instruction.

In a first preferred embodiment, the processor is further configured to super-encrypt the first encrypted instruction, and the first encrypted instruction is transferred encrypted to the second device.

In a fourth aspect, the invention is directed to a second device for participating in collaborative execution of a software application that comprises at least one encrypted instruction. The second device comprises a processor configured to receive a first encrypted instruction and an encrypted session key from a first device, the session key being encrypted using a first encryption algorithm and a first key; decrypt at least the encrypted session key using the first key; decrypt the first encrypted instruction using a third key to obtain an instruction; encrypt the instruction using a second encryption algorithm and the session key to obtain a second encrypted instruction and transfer the second encrypted instruction to the first device.

In a first preferred embodiment, the processor is configured to receive the first encrypted instruction super-encrypted, and to decrypt the super-encryption of the encrypted first encrypted instruction to obtain the first encrypted instruction.

### BRIEF DESCRIPTION OF DRAWINGS

Preferred features of the present invention will now be described, by way of non-limiting example, with reference to the accompanying drawings, in which
Figure 1 illustrates a generic method for executing a software application according to the invention;
Figure 2 illustrates a method for executing a software application according to a preferred embodiment of the invention;
Figure 3 illustrates a system for collaborative execution of a software application according to a preferred embodiment of the present invention;
Figure 4 illustrates a block diagram of a processor according to a preferred embodiment of the present invention; and
Figure 5 illustrates a block diagram of a block cipher circuit according to a preferred embodiment of the present invention.

### DESCRIPTION OF EMBODIMENTS

A main inventive idea of the present invention is to use a live protection mechanism that fits a pre-encryption mechanism.

In other words a protection mechanism is used for protecting the bus during data transfer. This data bus protection mechanism, which is executed by the Host, is designed in such a way that the unprotection operation (also partially executed by the Host) only works in the presence of a circuit, preferably joined to the distribution support. For that, part of the protection mechanism is shared between the Host and the hardware module implemented by the circuit, i.e. the circuit comprises a decryption method that is not known to the software application. The proposed protection is efficient in practice in terms of performance and hardware/software implementation.

The software application, which is intended to be executed by a host CPU, comprises a first bus encryption module *E₁* and a (preferably symmetric) *key k₁* and a second bus decryption module *D₂*. The software application also comprises at least one encrypted (even pre-encrypted) instruction J that needs to be decrypted before it can be executed. A distribution support that stores the software application comprises a circuit with a first bus decryption module *D₁*, and a key *k₁* that corresponds to the key of the first bus encryption module (i.e. identical in case of symmetric encryption and the 'other' key of the key pair in case of asymmetric encryption) and a second bus encryption module *E₂*. The circuit further comprises a third decryption module *Dₚᵣₑ* and a third key *kₚᵣₑ* that is fixed; these enable to decrypt the pre-encryption. It will be appreciated that the at least one encrypted instruction *J* has been encrypted before distribution of the software application by a software provider using an encryption key that corresponds to the third key *k_{pre;}* it is preferred that the software provider is capable of both encryption and decryption while the circuit only is capable of decryption.

The key *k₁* is preferably predetermined and shared by the circuit and the host. It is preferably obfuscated in the software application to be executed by the host CPU. It is also preferred that the host and the circuit only are able to perform one 'direction' of the encryption algorithm - i.e. encryption or decryption - and that the 'direction' is different for the host and the circuit.

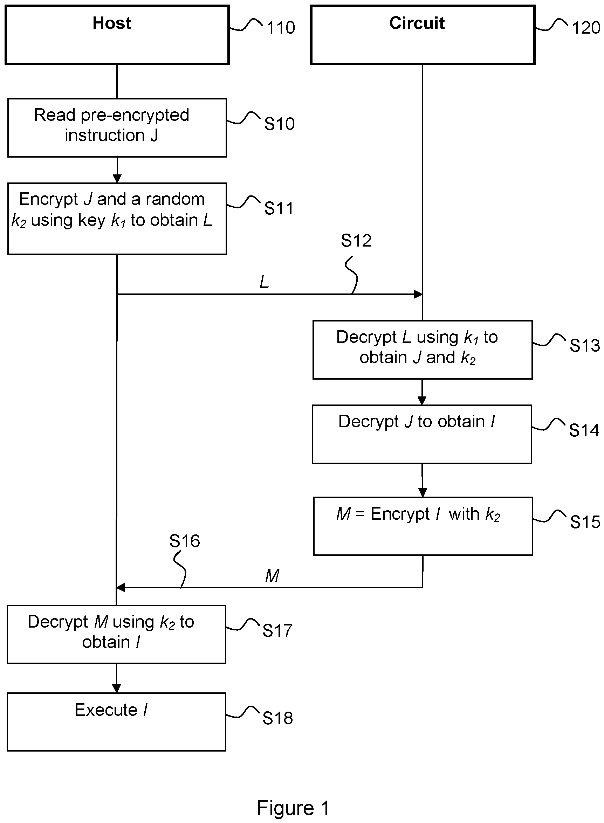

Figure 1 illustrates a generic method for executing a software application according to the invention. When the software application is to execute an encrypted instruction J, the host CPU 110 (executing the software application):
a. reads the encrypted instruction J S10;
b. encrypts S11 a combination of a random *k₂* and the encrypted instruction *J* using the first bus encryption module *E₁* and the *key k₁* to obtain a first transfer value *L,* i.e. *L= E₁{ k₁(J* || *k₂*)*;*
c. sends S12 the first transfer value *L* to the circuit 120.
   Upon reception of the first transfer value *L,* the circuit 120:
d. decrypts S13 *L* using the first bus decryption module *D₁*, and the key *k₁,* to obtain the random *k₂* and the encrypted instruction *J*;
e. decrypts S14 *J* using a third decryption module *Dₚᵣₑ* and a third key *kₚᵣₑ,* to obtain the instruction *I;*
f. encrypts S15 the instruction *I* using the second bus encryption module *E₂* and the random *k₂* (working as a key) to obtain a second transfer value *M*, i.e. *M= E₂{k₂}(I);* and
g. sends S16 the second transfer value *M* to the host 110.

Finally, since the software application knows *k₂* and further comprises bus decryption module *D₂,* it can obtain S17 the instruction *I* in the clear by calculating *I D₂{k₂)(M),* after which the host may execute S18 the instruction *I.*

As can be seen, the random *k₂* can be said to act as a session key for the instruction, both in its encrypted form and its re-encrypted form. It will be appreciated that the generic method may be performed without super-encryption of the encrypted instruction *J* that in that case is sent in the clear (preferably along with the encrypted random *k₂),* which in turn means that the decryption in step d only provides the random *k₂.*

The protocol of the present invention can significantly improve the security since the encryption is based on a new fresh random generated at each iteration, which means that replay attacks are thwarted.

As the host application environment is not trusted, it is preferred that the first encryption operation of the software application is implemented in white-box to combat extraction of the key *k₁* from the code. Also *k₂* is preferably protected in a way that prevents an adversary from retrieving it at a reasonable cost. An exemplary measure would be for the CPU to generate (at power-up) a new key value using an on-chip hardware random-number generator and store it in a tamper-proof key register.

It is preferable that the software application is protected in such a way that the protocol is used regularly during execution of the software application, e.g. by having a plurality of protected instructions.

It is also preferable whenever the Host is not using the external circuit, to generate random dummy access in order to complicate bus-observation analysis.

### First preferred embodiment

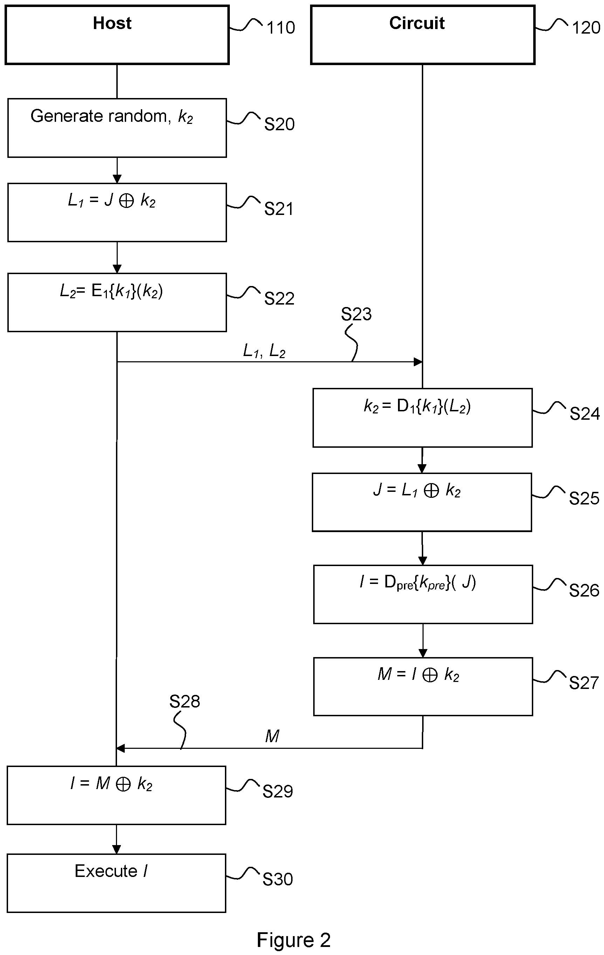

Figure 2 illustrates an exemplary method for executing a software application according to the invention. The software application comprises at least one encrypted software instruction, for example located at a specified address or in the data section of the software code. When the software application is to execute an encrypted instruction *J*, the host CPU 110 executing the software application:
a. generates S20 a random *k₂;*
b. XORs *k₂* with J to obtain a first transfer value; *L₁* = *J* ⊕ *k₂,* step S21;
c. encrypts S22 the random *k₂* using the first bus encryption module *E₁* and the key *k₁* to obtain a second transfer value, i.e. *L₂= E₁{ k₁}( k₂);*
d. sends S23 the first transfer value, second transfer value couple (*L_{1,} L₂*) to the circuit 120.
   Upon reception of the couple (*L₁, L₂*)*,* the circuit 120:
e. decrypts S24 *L₂* using the first bus decryption module *D₁*, and *k₁,* to obtain the random *k₂*;
f. computes S25 *J* = *L₁* ⊕ *k₂;*
g. decrypts S26 *J* using the third decryption module *Dₚᵣₑ* and the third key *kₚᵣₑ,* to obtain the instruction *I;*
h. computes S27 an XOR between the instruction *I* and *k₂* to obtain a third transfer value *M*, *M* = *I* ⊕ *k₂;* and
i. sends S28 the third transfer value M to the host.

Finally, since the application knows *k₂,* it can obtain S29 the instruction *I* in the clear by calculating *I* = *M* ⊕ *k₂,* after which the host may execute S30 the instruction *I*.

In a variant embodiment, the encrypted instruction *J* is sent in the clear from the host to the circuit, which means that *L₁* = *J* and that steps b and f are not performed.

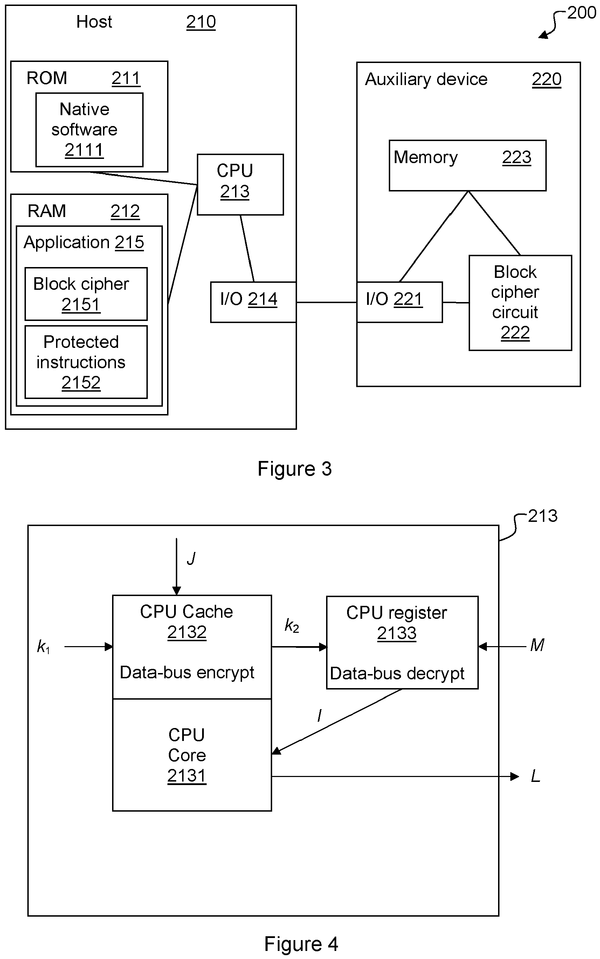

Figure 3 illustrates a system for collaborative execution of a software application according to a preferred embodiment of the present invention. The system 200 comprises a host 210 and an auxiliary device 220.

The host 210 can be practically any type of processing device, preferably a personal computer or a game console. The host 210 preferably comprises ROM 211, RAM 212, at least one processor 213 and an interface 214 adapted for interaction with the auxiliary device 220. The ROM 211 stores native software 2111, while the RAM 212 stores the software application 215 (advantageously downloaded from the auxiliary device 220) that comprises a white-box implementation of a block cipher 2151 such as AES and a number of encrypted instructions 2152. The processor 213 is adapted to execute the native software 2111 and the software application 215.

The auxiliary device 220, advantageously a RFID, comprises an interface 221 for communication with the host 210, a processor ("block cipher circuit") 222 having access to at least the two *keys k₁* and *kₚᵣₑ* described hereinbefore, and non-volatile memory 223. It should be noted that it is also possible for the auxiliary device 220 to implement two different block ciphers, one for each key. The block cipher circuit 222 is functionally connected to the interface 221 and the non-volatile memory 223.

During execution, the software application 215 may store data on or retrieve data from the non-volatile memory 223.

As illustrated in Figure 4, the host CPU 213, comprises a core CPU 2131 for executing software. The data-bus protection function is loaded into a CPU cache 2132 that generates the random *k₂;* encrypts *k₂* and *J* using *E₁,* and sends the encryptions to the interface 214. The data-bus decryption function is loaded into a CPU register 2133, receives k₂ from the CPU cache 2132 and an encrypted instruction *M= k₂* ⊕ *l* from interface 214, it then obtains the instruction *I* in the clear by calculating *I = k₂* ⊕ *M*, after which the core CPU 2131 may execute the instruction *I*.

Before distribution of the software application, at least one instruction is encrypted. This is preferably achieved by using a probabilistic encryption in order to have two different encryptions for the same input under the same key.

The software application can be delivered to the host 210 using any suitable distribution mechanism (e.g. Internet, optical media, or inside the auxiliary device 220). In case the software application is distributed over for example the Internet, the auxiliary device 220 must somehow be delivered to the user for the software application to run properly.

The software application preferably comprises a white-box implementation of an AES decryption module having a secret key *k₁*. The application contains also the set of encrypted instructions.

### Second Preferred embodiment

Here instructions are encrypted by XOR-ing each instruction *Iᵢ* with an encrypted random value E(*Rᵢ*), i.e. *Iᵢ* ⊕ E(*Rᵢ*). The encrypted instruction is stored together with the corresponding random value, giving a set of *n* encrypted instructions:
{(*I_{0 ⊕}* (*R₀*);*R₀*);...
(*Iᵢ* ⊕ E(*Rᵢ*); *Rᵢ*); ...
(*Iₙ* ⊕ E(*Rₙ*); *Rₙ*)}

The host protocol may be implemented as follows assuming that an instruction *I* is 64 bits long, and that the random values *Rᵢ*, *k₂* and *k₃* are also 64 bits long. The algorithm E₁ and Eₚᵣₑ are 128-bit AES encryption implemented in ECB mode. E₁ under key k₁ is white-box implemented and encryption algorithm E₂ (as well as the decryption algorithm D₂) is implemented as an XOR operation using the two random values k₂ and k₃

| |
|---|
| ***Input:* J *=* Iᵢ**⊕(Eₚᵣₑ{kₚᵣₑ}(0x00\|₆₄\|\| Rᵢ\|₆₄))\|₆₄; Rᵢ are both 64 bits. |
| ***Vars:*** k₂, k₃ , L₁, L₂, Res |
| k₂← RandGen(1⁶⁴); |
| k₃← RandGen(1⁶⁴); |
| L₁← E₁{k₁}(k₂\|\| J ⊕ k₃ ) |
| L2← Rᵢ ⊕ k₂ |
| **Send *L₁* and *L₂*** |
| **Upon receiving *M*** |
| Res ← M ⊕ k₂ ⊕ k₃ |
| ***Output:*** Res |

The corresponding auxiliary device protocol is implemented as follows:

| |
|---|
| **Upon receiving *L₁* and *L₂*** |
| ***Vars:*** k'₂, R, M |
| k'₂\|₆₄ \|\| N\|₆₄← D₁{k₁}(L₁) |
| R ← L₂ ⊕ k'₂ |
| M ← (Eₚᵣₑ{kpre}(0x00\|₆₄ \|\|R\|₆₄))\|₆₄ ⊕ N ⊕ k'₂; |
| ***Output:*** M |

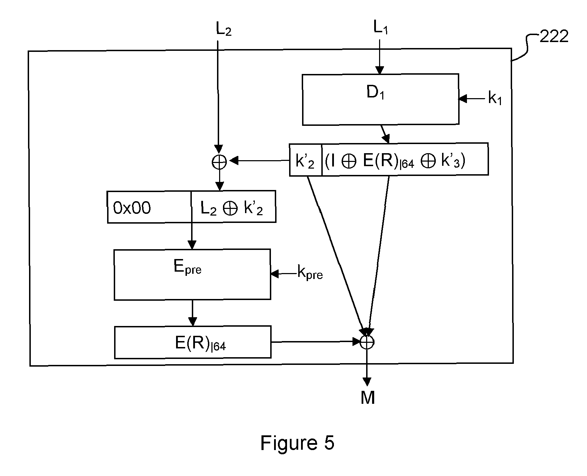

It will be appreciated that the protocol parts match even though the variables have different names; this is to reflect that e.g. k₂ and k'₂ are identical when the protocol works as it should, but there is no way for the auxiliary device to know whether or not this is the case. (The same holds true in Figure 5 hereinafter.)

As for the auxiliary device, it is assumed that the non-volatile memory 223 can be read easily by the host, but that the block cipher circuit 223 is tamper-proof. Figure 5 illustrates a block diagram of the block cipher circuit according to the second preferred embodiment of the present invention.

The AES implementation described by Menezes, van Oorschot and Vanstone is a chip with 3,595 gates. The encryption of 128 bits requires about 1000 clock cycles. As two encryption steps are needed in the protocol, a given round requires about 2000 clock cycles to process the data.

It will thus be appreciated that the invention provides a lightweight protocol for authenticating and checking the presence of an auxiliary device.

From a performance perspective, the advantages can comprise:
- the number of exchanged messages and their content are minimal. With 64-bit instructions and an AES block cipher, the number of bytes exchanged is 32 bytes (L₁+L₂+M);
- there are only two passes in the protocol; and
- the computational complexity is low for both sides: 1 block encryption for the host and 2 block encryptions for the auxiliary device.

From a security perspective:
- The protocol can be renewable in the sense that the protocol key and the white-box implementation can be different between software applications.
- More importantly, the protocol is secure as it can counter replay and dictionary attacks with an adversary that spies on the bus during data transfer. The protocol is then immune against bus-observation analysis.
- The protocol can provide a good price/security trade-off and it can therefore be used for protecting current applications.

While the encrypted instruction described hereinbefore is advantageously read from a distribution support such as a DVD or CD-ROM, it may also be read from a signal received from an outside source such as a server on the Internet. Furthermore, in the description the encrypted instruction is encrypted using encryption in a broad sense of the expression, including for example 'ordinary encryption (such as the one used to protect session key *k₂)* and obfuscation (e.g. by permutation of opcodes) and the key corresponds to 'instructions' for how to undo the obfuscation.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A first method of participating in collaborative execution of a software application, the software application comprising at least one encrypted instruction (*J*) being the encryption of an unencrypted instruction (*I*), the method comprising at a first device (210) the steps of:
obtaining (S10) a first encrypted instruction (*J*);
generating (S11; S20) a session key *k₂;*
encrypting (S11; S22) at least the session key *k*₂ using a first encryption algorithm and a first key *k*₁; and
transferring (S12; S23) the first encrypted instruction and the encrypted session key *k*₂ to a second device (220);
receiving (S16; S28) from the second device (220) a second encrypted instruction (*M*), the second encrypted instruction (*M*) being an encryption using the session key *k₂* of the unencrypted instruction *(I);*
decrypting (S17; S29) the second encrypted instruction (*M*) using the session key *k₂* to obtain the unencrypted instruction (*I*); and
executing (S18; S30) the unencrypted instruction *(I).*

2. The first method of participating in collaborative execution of a software application of claim 1, further comprising super-encrypting the first encrypted instruction (*J*), wherein the first encrypted instruction is transferred super-encrypted to the second device (220).

3. A second method of participating in collaborative execution of a software application, the software application comprising at least one encrypted instruction (*J*), the method comprising at a second device (220) the steps of:
receiving (S12; S23) a first encrypted instruction and an encrypted session key k₂ from a first device (210), the session key k₂ being encrypted using a first encryption algorithm and a first key k_{1;}
decrypting (S13; S24) at least the encrypted session key *k₂* using the first key *k*₁;
decrypting (S14; S26) the first encrypted instruction using a third key *k*ₚᵣₑ to obtain an instruction (*I*);
encrypting (S15; S27) the instruction (*I*) using a second encryption algorithm and the session key *k₂* to obtain a second encrypted instruction (M); and
transferring (S15; S28) the second encrypted instruction (*M*) to the first device (210).

4. The second method of participating in collaborative execution of a software application of claim 3, wherein the first encrypted instruction is received super-encrypted and wherein the second device further decrypts the super-encryption of the encrypted first encrypted instruction.

5. A first device (210) for participating in collaborative execution of a software application that comprises at least one encrypted instruction (*J*) being the encryption of an unencrypted instruction (*I*), the first device (210) comprising a processor (213) configured to:
obtain a first encrypted instruction (*J*);
generate a session key *k*₂;
encrypt at least the session key *k*₂ using a first encryption algorithm and a first key *k*₁;
transfer the first encrypted instruction and the encrypted session key *k*₂ to a second device (120);
receive from the second device (120) a second encrypted instruction (*M*), the second encrypted instruction (*M*) being an encryption using the session key *k*₂ of the unencrypted instruction *(I);*
decrypt the second encrypted instruction (*M*) using the session key *k*₂ to obtain the instruction (*I*); and
execute the instruction (*I*).

6. The first device of claim 5, wherein the processor is further configured to super-encrypt the first encrypted instruction (*J*), and wherein the first encrypted instruction (*J*) is transferred super-encrypted to the second device.

7. A second device (220) for participating in collaborative execution of a software application that comprises at least one encrypted instruction (*J*), the second device (120) comprising a processor (222) configured to:
receive a first encrypted instruction and an encrypted session key *k*₂ from a first device (110), the session key *k*₂ being encrypted using a first encryption algorithm and a first key *k*₁;
decrypt at least the encrypted session key *k*₂ using the first key *k*₁;
decrypt the first encrypted instruction using a third key *k*ₚᵣₑ to obtain an instruction *(I);*
encrypt the instruction (*I*) using a second encryption algorithm and the session key *k*₂ to obtain a second encrypted instruction (*M*); and
transfer the second encrypted instruction (*M*) to the first device (110).

8. The second device of claim 7, wherein the processor is configured to receive the first encrypted instruction super-encrypted, and to decrypt super-encryption of the encrypted first encrypted instruction to obtain the first encrypted instruction (*J*).
